(19) Europäisches Patentamt

European Patent Office

Office européen des brevets

(11) **EP 1 291 383 B1**

(12) **EUROPEAN PATENT SPECIFICATION**

(45) Date of publication and mention
of the grant of the patent:
**31.03.2004 Bulletin 2004/14**

(51) Int Cl.$^7$: **C08K 5/15**, C08L 23/08,
C08L 67/02, B01D 69/14,
B01D 71/48, B01D 71/26,
B65D 1/02

(21) Application number: **01119688.8**

(22) Date of filing: **23.08.2001**

(54) **Container having improved organoleptic barrier properties**

Behälter mit verbesserten Barriereeigenschaften gegenüber organoleptischen Substanzen

Récipient doté de propriétés de barrière aux substances organoleptiques améliorées

(84) Designated Contracting States:
**AT BE CH CY DE DK ES FI FR GB GR IE IT LI LU MC NL PT SE TR**

(43) Date of publication of application:
**12.03.2003 Bulletin 2003/11**

(73) Proprietor: **Cellresin Technologies, LLC
St. Paul, MN 55110-5254 (US)**

(72) Inventors:
• **Wood, Will
Arden Hills, MN 55112 (US)**
• **Beaverson, Neil
Vadnais Heights, MN 55127 (US)**

(74) Representative: **Maiwald Patentanwalts GmbH
Elisenhof,
Elisenstrasse 3
80335 München (DE)**

(56) References cited:
**US-A- 5 837 339**

• **DATABASE CA [Online] CHEMICAL ABSTRACTS SERVICE, COLUMBUS, OHIO, US; YOSHINAGA, MASANOBU: "Bad taste- or odor-free packaging materials without migration of low molecular weight byproducts of polyethylene" retrieved from STN Database accession no. 129:42166 CA XP002188605 & JP 10 151710 A (TOPPAN PRINTING CO., LTD., JAPAN) 9 June 1998 (1998-06-09)**

Remarks:
The file contains technical information submitted after the application was filed and not included in this specification

EP 1 291 383 B1

**Description**

The invention relates to plastic containers having improved organoleptic barrier properties. The invention especially relates to thermoformed polyolefin or polyester beverage containers.

Rigid, or semirigid plastic food-contact containers are known and have been widely used for many years. They are used to package e.g. mineral water, juices, carbonated soft drinks and water, beer and other liquid products. Food containers, especially beverage containers, are commonly consisting of a thermoplastic polyolefin or polyester material.

Thermoplastic polyolefin containers typically comprise high density polyethylene. Other vinyl polymers can also be used in formulating plastic containers, including polymers made from monomers such as ethylene, propylene, butylene, butadiene, styrene and others. Such materials often contain small concentrations of residual monomers, contaminants in the olefin feed, catalyst residues and other contaminants. Such containers are typically blow molded using common thermoforming technology to shape a preform into a container or e.g. a finished bottle.

Other containers, especially beverage containers, are made from a polyester material. Such polyesters are commonly made from a diol such as ethylene glycol, 1,4-butane diol, 1,4-cyclohexane diol and other diols, copolymerized with an organic diacid compound or lower diester thereof such as terephthalic acid, 2,6-naphthalene dicarboxylic acid etc. The condensation/polymerization reaction occurs between the dicarboxylic acid, or a dimethyl ester thereof and the glycol material in a heat driven reaction that releases water or methanol as a reaction by-product leaving the high molecular weight polyester material. Typically, bulk polyester is injection blow molded over a steel-core rod or formed into a preform containing the polyester. The preform is introduced into a blow molding machine wherein the polyester is heated and blown to an appropriate shape and volume for e.g. a beverage container.

The thermoplastic polyester is a high molecular weight material, but can contain a large variety of relatively low molecular weight compounds. These compounds can be extractable into food or beverage within the container. These extractable materials typically comprise impurities in feed streams of the diol or diacid used in making the polyester. Further, the extractable materials can comprise degradation by-products of the polymerization reaction, the preform molding process or the thermoforming blow molding process. Further, the extractable materials can contain residual diester, diol or diacid materials including methanol, ethylene glycol, terephthalic acid, dimethyl terephthalic acid, 2,6-naphthalene dicarboxylic acid and esters or ethers thereof. Relatively low molecular weight oligomeric linear or cyclic diesters, triesters or higher esters made by reacting equimolar amounts of ethylene glycol and terephthalic acid may be present. These relatively low molecular oligomers can comprise two or more moles of diol combined with two or more moles of diacid. Schiono, Journal of Polymer Science: Polymer Chemistry Edition, Vol. 17, pp. 4123-4127 (1979), John Wiley & Sons, Inc. discusses the separation and identification of PET impurities comprising poly(ethylene terephthalate) oligomers by gel permeation chromatography. Bartl et al., "Supercritical Fluid Extraction and Chromatography for the Determination of Oligomers and Poly(ethylene terephthalate) Films", Analytical Chemistry, Vol. 63, No. 20, Oct. 15, 1991, pp. 2371-2377, discusses experimental supercritical fluid procedures for separation and identification of a lower oligomer impurity from polyethylene terephthalate films

Plastic materials are not inert and where direct contact between e.g. the packaged foodstuff and the plastic container occurs, there can be transfer of sufficiently mobile or soluble substances into the foodstuff, driven by the concentration gradient. Problems with taste and odor can be inherent in the resin by virtue of raw material impurities, polymer breakdown products, processing additives and manufacturing process. Some of these undesired organoleptic compounds are listed above in connection with polyolefin or polyester containers. Very often the taste and odor problems develop in the resins during the conversion phase. Thermal oxidation reactions caused by high process temperatures, shear and long machine residence time degrade the polymer, creating polymer chain scission and oxidation that can lead to creation of low molecular weight, volatile organoleptic compounds. The general class of compounds contributing to undesirable off taste are saturated aldehydes and, to a lesser extent alpha-unsaturated aldehydes, and/or other flavor-affecting compounds, herein referred to generally as organoleptic compounds.

Plastic food-contact containers should of course not impart odor or off-taste to the stored food product. The beverage bottling industry, for example, has established testing methods and maximum acceptable levels of specific thermoplastic oxidation products, as for example acetaldehyde, typically generated during the bottle manufacturing process. The human taste thresholds for many of these process generated oxidation products are parts per billion (ppb). For example, acetaldehyde has been reported to have a taste threshold of 20 ppb in water. Accordingly, one of the main problems in the field of bottle manufacturing, especially PET-bottle manufacturing is in the presence of free or volatile acetaldehyde.

Similar problems are known in the field of non-food containers. Pharmaceutical products can, for example, be reactive to resin oxidation products reducing drug potency over their storage life. Pharmaceutical substances as for example acetylenic compounds, nucleophilic compounds, amines, nucleic acid, polypeptides, triazines, triazoles, semicarbizides, thiocarbazides and sulfonamides would react with carbonyl compounds, especially aldehydes, thereby forming undesired new products.

Apart from the aforementioned "barrier problems", the thermoplastic materials used for the manufacture of e.g. beverage containers, have to meet certain stability criteria or physical requirements. For example beverage containers must have high burst resistances to resist pressure exerted on the walls of the container by carbonated beverages. It is therefore important not to adversely affect the properties (e.g. burst resistance, color, clarity and gloss) of the container by addition of e.g. auxiliary materials to the thermoplastic polymer or by modifying the bottle molding process. For example it is known that addition of certain "barrier materials" as e.g. unmodified cyclodextrin may lead to degradation during processing of the thermoplastic material containing said cyclodextrin. The degradation of the cyclodextrin can cause substantial melt fracture in the extrudate which can be detected by visual inspection.

Beverage manufacturers have long searched for improved barrier material. In larger part, this research effort was directed to carbon dioxide ($CO_2$) barriers, oxygen ($O_2$) barriers and water vapor ($H_2O$) barriers. More recently bottle manufacturers have had a significant increase in sensitivity to the presence of beverage extractable or beverage soluble materials in the resin or container. In order to improve the barrier properties polymer coatings or polymer laminates of less permeable polymers have been applied to the plastic container to decrease permeability.

An alternative attempt for improving the barrier properties of thermoplastic bottle containers is disclosed in US 5,837,339. According to US 5,837,339 the barrier or trapping properties of polymeric beverage bottles can be improved by using a modified cyclodextrin or compatible cyclodextrin material. The barrier properties of the polymer material are based on trapping the respective permeants in the internal hydrophobic space of the cyclodextrin molecule. The cyclodextrin material is used in the form of a compatible derivatized cyclodextrin in order to obtain a trapping or barrier layer consisting of the bulk polymer and cyclodextrin. According to US 5,837,339 the preferred cyclodextrin is a derivatized cyclodextrin having substituents bonded to the cyclodextrin molecule. However, US 5,837,339 does not teach if there is specific degree of substitution of cyclodextrin being superior or inferior, let alone how many substituents per cyclodextrin molecule are advantageous or ideal.

In principle, the cyclodextrin can contain one substituent on the single primary carbon hydroxyl and one substituent on one or both of the secondary hydroxyls on each glucoside unit of the cyclodextrin molecule. In theory, it is possible to fix three substituents to each glucoside unit hence the maximum degree of substitution for a cyclodextrin is 100%. In other words, in a cyclodextrin material having the maximum degree of substitution, in 100 % of the hydroxyl groups of the cyclodextrin material, H is replaced by a substituent

In US 5,837,339 it is disclosed that the cyclodextrin to be used is a derivatized cyclodextrin having at least one substituent group bonded to the cyclodextrin molecule. Since in theory it is possible to fix 21 substituents to e.g. a β-cyclodextrin molecule having 7 glucoside units, one substituent group bonded to the cyclodextrin molecule corresponds to about 5 % degree of substitution.

In US 5,837,339 it has been found that the derivatization of the cyclodextrin molecule results in improved blending into the thermoplastic bulk polymer thereby providing good structural properties in the bulk polymer. Although according to US 5,837,339 the thermal stability and the compatibility of the thermoplastic material is improved by using partly derivatized cyclodextrin instead of unmodified cyclodextrin, the thermal stability and also the compatibility of the cyclodextrin material is not very good, let alone optimal.

It is an object of the present invention to provide a plastic container having excellent organoleptic barrier properties. Moreover, it is an object to provide a plastic container with excellent barrier properties, wherein the advantageous material properties of the plastic container, as for example clarity, colour or structural properties, are not affected by modifications of the thermoplastic container material. Further, it is an object of the present invention to provide a plastic container which can be produced without changing or modifying the conventional container manufacturing processes.

According to the present invention a container having improved barrier properties is provided, the container comprising

  (a) a thermoplastic polymer; and
  (b) having uniformly dispersed in the polymer an effective absorbing amount of a cyclodextrin material; wherein the cyclodextrin is subtantially free of an inclusion complex compound and the cyclodextrin comprises an α-cyclodextrin, a β-cyclodextrin, a γ-cyclodextrin or mixtures thereof, having pendant moieties or substituents that render the cyclodextrin compatible with the thermoplastic polymer, wherein in 20 to 40% of the hydroxyl groups of the cyclodextrin material, H is replaced by a substituent.

The container of the present invention comprises a thermoplastic polymer containing a compatible cyclodextrin derivative composition to provide improved barrier resistance to permeants without any adverse affect on the properties of the plastic material, such as, clarity, processability and structural integrity of the article. The cyclodextrin derivative is selected based on the functional group compatibility with the polymer, the thermal stability of the cyclodextrin material and the cyclodextrin's ability to form an inclusion complex with targeted resin degradation products. It has been found, that the degree of substitution on the cyclodextrin material influences not only the compatibility with the polymer, but also the e.g. the thermal stability of the cyclodextrin itself as well as of the resulting barrier material in a specific and predictable way.

Surprisingly, it has been found that a degree of substitution on the cyclodextrin material OH-groups in the range between 20 % and 40% not only leads to superior compatibility and stability, but also to improved barrier properties of the resulting plastic material in comparison to thermoplastic materials bearing modified cyclodextrins with a high or very low degree of substitution.

The cyclodextrin derivative can contain one substituent on the single primary carbon hydroxyl and one substituent on one or both of the secondary carbon hydroxyls. It has been found, that the most thermally stable and compatible cyclodextrins have all of their substituent hydroxyls groups reacted. However, it turned out the complexing ability or the barrier properties of compatible cyclodextrins having a very high degree of substitution, are limited. Moreover, the inventors of the present invention found that a very low degree of substitution of cyclodextrin leads to cyclodextrin materials having the tendency to decompose (ring opening) and discolor, e.g. during processing the cyclodextrin-containing thermoplastic material.

The inventors of the present invention found, that it is advantageous if 20 to 40 %, preferably 25 to 40 %, more preferably 30 to 35 % and most preferably about 33 % of the hydroxyl groups of the cyclodextrin material contain a substituent. By using the inventive barrier materials containing a compatible cyclodextrin having the corresponding inventive degree of substitution, not only the best inclusion complex forming results are obtained, but also e.g. the thermal stability of the material is excellent at the same time.

In preferred embodiments the inventive container has at least two layers, wherein at least one layer comprises

(a) a thermoplastic polymer; and
(b) having uniformly dispersed in the polymer an effective absorbing amount of a cyclodextrin material; wherein the cyclodextrin is free of an inclusion complex compound and the cyclodextrin comprises an $\alpha$-cyclodextrin, a $\beta$-cyclodextrin, a $\gamma$-cyclodextrin or mixtures thereof, having pendant moieties or substituents that render the cyclodextrin compatible with the thermoplastic polymer, wherein 20 to 40% of the hydroxyl groups of the cyclodextrin material are substituted.

According to an especially preferred embodiment of the present invention a PET-container, especially a PET-bottle is provided having uniformly dispersed in the PET material an effective absorbing amount of a cyclodextrin material; wherein the cyclodextrin is free of an inclusion complex compound and the cyclodextrin comprises an $\alpha$-cyclodextrin, a $\beta$-cyclodextrin, a $\gamma$-cyclodextrin or mixtures thereof, having acetyl moieties that render the cyclodextrin compatible with the PET, wherein in 20 to 40 % of the hydroxyl groups of the cyclodextrin material, H is replaced by a acetyl-substituent.

## Container

The present invention is directed to rigid or semirigid plastic containers. In preferred embodiments, the inventive containers comprise food-contact containers, especially beverage containers used to package e.g. mineral water, juices, carbonated soft drinks and water, beer and other liquid products. The containers, especially beverage containers, according to the present invention comprise one or more layers of a thermoplastic, especially polyolefin or polyester material. In a further preferred embodiment the inventive containers are non-food containers e.g. used for packaging solid or liquid pharmaceuticals.

Typical beverage containers, such as bottles, have a mouth, walls and base made from a thermoplastic polymer. The bottle bottom typically has a lobed design such as a four lobe or five lobe design to permit the bottle be placed in a stable upright position. Alternatively, the molded bottles, having a hemispherical bottom, can be adhesively bonded to a polyethylene or polypropylene base cut to provide placement stability.

Preferred beverage containers according to the present invention can e.g. have volumes from 0.2-liters to 4-liters comprising a cylinder with walls, open ended mouth and closed base.

The wall thickness usually is in the range between 100 $\mu$m and 2000 $\mu$m, preferably in the range between 150 $\mu$m and 950 $\mu$m. The most preferred beverage containers have volumes of 0.3-liters to 2-liter with wall thicknesses ranging from 150 $\mu$m to 400 $\mu$m. The wall thickness of PET containers or containers comprising a thermoplastic polymer selected from the group comprising polyethylene terephthalate (PET) homopolymer, polyethylene terephthalate copolymers and polyethylene naphthenate copolymers is in the range between 150 $\mu$m and 400 $\mu$m. The wall thickness of PE containers or containers comprising a thermoplastic polymer selected from the group comprising a polyolefine selected from the group comprising high density polyethylene (HDPE), low density polyethylene (LDPE), polystyrene (PS) and polyvinyl chloride is in the range between 300 $\mu$m and 950 $\mu$m.

According to the present invention, it is also envisaged to provide a multilayer container having at least two layers, wherein at least one layer comprises a thermoplastic polymer; and having uniformly dispersed in the polymer an effective absorbing amount of an inventive cyclodextrin derivative material.

**Cyclodextrin**

The invention includes a thermoplastic polymer containing a compatible cyclodextrin derivative composition to provide improved barrier resistance to permeants without any adverse affect on the properties of the thermoplastic material, such as, clarity, processability and structural integrity of the article.

Cyclodextrin is commonly produced by a highly selective enzymatic synthesis. It generally consists of six, seven, or eight glucose monomers arranged in a donut shaped ring, which are denoted alpha-, beta-, or gamma-cyclodextrin, respectively. The specific coupling of the glucose monomers gives the cyclodextrin a rigid, truncated conical molecular structure with a hollow interior of a specific volume. This internal cavity is a key structural feature of the cyclodextrin, providing the ability to complex molecules (e.g., aromatics, alcohols, halides and hydrogen halides, carboxylic acids and their esters, etc.). The complexed molecule must satisfy the size criterion of fitting at least partially into the cyclodextrin internal cavity, resulting in an inclusion complex.

According to the present invention the cyclodextrin is based on an alpha-cyclodextrin (alpha-CD), a beta cyclodextrin (beta-CD), a gamma-cyclodextrin (gamma-CD) or mixtures thereof. Also, according to the present invention a cyclodextrin derivative inter alia is selected based on the functional group compatibility with the polymer on one hand and the cyclodextrin's ability to form an inclusion complex with targeted resin degradation products on the other hand.

Accordingly, the first requirement is compatibility with the resin as well as thermal stability in the manufacturing conversion process. According to the present invention, "compatible" means that the cyclodextrin material can be uniformly dispersed into the melt polymer, can retain the ability to trap or complex permeant materials or polymer impurity, and can reside in the polymer without substantial reductions in barrier properties or container forming characteristics. Compatibility for the purposes of the present invention can be determined by measuring polymer characteristics such as tensile strength, tear resistance, surface smoothness, clarity, etc. Qualitative compatibility screening can be obtained by preparing small batches of thermoplastic polymer and substituted cyclodextrin. The blended material is extruded at production temperatures as a linear strand extrudate having a diameter of about one to five mm. Incompatible cyclodextrin materials will not disperse uniformly in the melt and can be seen in the transparent melt polymer immediately upon extrusion from the extrusion head. Incompatible cyclodextrin or cyclodextrin having an insufficient thermal stability can degrade at extrusion temperatures and produce a characteristic "burnt flour" odor in an extrusion. Moreover, incompatible or not sufficiently compatible cyclodextrin can cause substantial melt fracture in the extrudate which can be detected by visual inspection. Lastly, the extrudate can be cut into small pieces, cross-sectioned and examined using an optical microscope to find cyclodextrin, which is not suitable according to the present invention and clearly visible in the thermoplastic matrix. However, in some cases poorly dispersed agglomerates of compatible cyclodextrins are visible by optical microscopy. This is due to improper extrusion techniques or equipment and not a problem of incompatibility.

Second, the cyclodextrin's internal cavity size (i.e., $\alpha$, $\beta$, $\gamma$) must be considered and the derivative functional group modification must be suitable for forming an inclusion complex with targeted impurities. To achieve a specific result, more than one cavity size and functional group may be necessary. For example, blends of $\alpha$ and/or $\beta$ that contain $\gamma$-cyclodextrin have greater complexation efficiencies for resin oxidation products than without $\gamma$-cyclodextrin. Computational modelling has shown that the type and number of functional groups on the ring provide different complexation energies for specific ligands (i.e., complexed impurities). These complexation energies ($\Delta E^{steric}$ and $\Delta E^{electrostatic}$) can be calculated for a specific derivative, cavity size and ligand. Hence, inclusion complexation is predictable to some extent. For example, the inventors found out that acetylated $\beta$-cyclodextrin is the most effective cyclodextrin derivative for acetylaldehyde in PET followed by acetylated $\alpha$-cyclodextrin and then acetylated $\gamma$-cyclodextrin.

The compatible cyclodextrin derivative according to the present invention is a compound substantially free of an inclusion complex. For this invention, the term "substantially free of an inclusion complex" means that the quantity of the dispersed cyclodextrin material in the bulk polymer contains a large fraction having cyclodextrin free of a polymer contaminant, a permeant or other inclusion compound in the interior of the cyclodextrin molecule. A cyclodextrin compound is typically added and blended in the bulk polymer without any inclusion compound but some complexing can occur during manufacture. Such complexing can occur as polymer impurities and degradation materials become the inclusion compound in a cyclodextrin inclusion complex.

In principle, the cyclodextrin derivative can contain one substituent on the single primary carbon hydroxyl and one substituent on one or both of the secondary carbon hydroxyls. As mentioned above, the most thermally stable and compatible cyclodextrins have all of their substituent hydroxyls groups reacted. However, this is usually not the most effective to form an inclusion complex with e.g. resin degradation products. When 20 to 40 %, preferably 25 to 40 %, more preferably 30 to 35 % and most preferably about 33 % of the hydroxyl groups of the cyclodextrin material contain a substituent excellent inclusion complex forming results are obtained. A useful measure of the substituent groups on the cyclodextrin ring can be obtained by examining the cyclodextrin derivative by Matrix Assisted Laser Desorption Ionization Time-of-Flight Mass Spectrometry (MALDI-TOF MS). A useful indirect measure of the substituent groups on the cyclodextrin ring can be obtained by examining the cyclodextrin derivative melting point in a Differential Scanning Calorimeter (DSC).

Because of the geometry of the cyclodextrin molecule, and the chemistry of the ring substituents, the hydroxyl groups are not equal in reactivity. However, with care and effective reaction conditions, the cyclodextrin molecule can be reacted to obtain a derivatized molecule having a certain number of hydroxyl groups derivatized with a single substituent type. Further directed synthesis of a derivatized molecule with two different substituents or three different substituents is also possible. These substituents can be placed at random or directed to a specific hydroxyl. For the purposes of this invention, a broad range of pendant substituent moieties can be used on the molecule. These derivatized cyclodextrin molecules can include alkyl ether, silyl ether, alkyl ester, including cyclodextrin esters such as tosylates, mesylate and other related sulfo derivatives, hydrocarbyl-amino cyclodextrin, alkyl phosphono and alkyl phosphato cyclodextrin, imidazoyl substituted cyclodextrin, pyridine substituted cyclodextrin, hydrocarbyl sulphur containing functional group cyclodextrin, silicon-containing functional group substituted cyclodextrin, carbonate and carbonate substituted cyclodextrin, carboxylic acid and related substituted cyclodextrin and others.

Acyl groups that can be used as compatibilizing functional groups include acetyl, propionyl, butyryl, trifluoroacetyl, benzoyl and acryloyl groups. The formation of such groups on the hydroxyls of the cyclodextrin molecule involve well known reactions. The acylation reaction can be conducted using the appropriate acid anhydride, acid chloride, and well known synthetic protocols.

Cyclodextrin materials can also be reacted with alkylating agents to produced an alkylated cyclodextrin. Typical examples of alkyl groups useful in forming the alkylated cyclodextrin include methyl, propyl, benzyl, isopropyl, tertiary butyl, allyl, trityl, alkyl-benzyl and other common alkyl groups. Such alkyl groups can be made using conventional preparatory methods, such as reacting the hydroxyl group under appropriate conditions with an alkyl halide, or with an alkylating alkyl sulfate reactant.

Tosyl(4-methylbenzene sulfonyl), mesyl (methane sulfonyl) or other related alkyl or aryl sulfonyl forming reagents can also be used in manufacturing compatibilized cyclodextrin molecules for use in thermoplastic resins. The primary --OH groups of the cyclodextrin molecules are more readily reacted than the secondary groups. However, the molecule can be substituted on virtually any position to form useful compositions having a sufficient degree of substitution.

Sulfonyl containing functional groups can be used to derivatize either of the secondary hydroxyl groups or the primary hydroxyl group of any of the glucose moieties in the cyclodextrin molecule. The reactions can be conducted using a sulfonyl chloride reactant that can effectively react with either primary and secondary hydroxyl. The sulfonyl chloride is used at appropriate mole ratios depending on the number of target hydroxyl groups in the molecule requiring substitution. Sulfonyl groups can be combined with acyl or alkyl groups.

The sulfonyl derivatized cyclodextrin molecule can be used to generate the amino derivative from the sulfonyl group substituted cyclodextrin molecule via nucleophilic displacement of the sulfonate group by an azide-ion. The azido derivatives are subsequently converted into substituted amino compounds by reduction. Large numbers of these azido or amino cyclodextrin derivatives have been manufactured.. Examples of nitrogen containing groups that can be useful in the invention include acetylamino groups (--NHAc), alkylamino including methylamino, ethylamino, butylamino, isobutylamino, isopropylamino, hexylamino, and other alkylamino substituents. The amino or alkylamino substituents can further be reactive with other compounds that react with the nitrogen atom to further derivatize the amine group.

The cyclodextrin molecule also can be substituted with heterocyclic nuclei including pendent imidazole groups, histidine, imidazole groups, pyridino and substituted pyridino groups.

Cyclodextrin derivatives can be modified with sulfur containing functional groups to introduce compatibilizing substituents onto the cyclodextrin. Apart from the sulfonyl acylating groups mentioned above, sulfur containing groups manufactured based on sulfhydryl chemistry can be used to derivatize cyclodextrin. Such sulfur containing groups include methylthio (--SMe), propylthio (--SPr), t-butylthio (--S--C(CH$_3$)$_3$), hydroxyethylthio (--S--CH$_2$ CH$_2$ OH), imidazolylmethylthio, phenylthio, substituted phenylthio, aminoalkylthio and others. Based on the ether or thioether chemistry set forth above, cyclodextrin having substituents ending with a hydroxyl aldehyde ketone or carboxylic acid functionality can be prepared. Cyclodextrin with derivatives formed using silicone chemistry can contain compatibilizing functional groups.

Cyclodextrin derivatives with functional groups containing silicone herein called silicon ether can be prepared. Silicone groups generally refer to groups with a single substituted silicon atom or a repeating silicone-oxygen backbone with substituent groups. Typically, a significantly proportion of silicone atoms in the silicone substituent bear hydrocarbyl (alkyl or aryl) substituents. Silicone substituted materials generally have increased thermal and oxidative stability and chemical inertness. Further, the silicone groups increase resistance to weathering, add dielectric strength and improve surface tension. The molecular structure of the silicone group can be varied because the silicone group can have a single silicon atom or two to twenty silicon atoms in the silicone moiety, can be linear or branched, have a large number of repeating silicone-oxygen groups and can be further substituted with a variety of functional groups. For the purposes of this invention the simple silicone containing substituent moieties are preferred including trimethylsilyl, mixed methyl-phenyl silyl groups, etc.

In preferred embodiments of the present invention the cyclodextrin material comprises substituents having a silyl ether group, an alkyl ether group and/or an alkyl ester group. According to the present invention the alkyl ester substituents preferably comprise acetyl moieties, propyl moieties and/or butyl moieties, the alkyl ether substituents preferably comprise methyl moieties, ethyl moieties and/or propyl moieties and the silyl ether substituents preferably comprise methyl moieties, ethyl moieties, propyl moieties and/or butyl moieties.

According to the present invention it is especially preferred that the cyclodextrin material is a β-cyclodextrin having acetyl moieties.

According to the present invention the amount of cyclodextrin derivative in the thermoplastic material preferably is in the range from about 0.05 to 5 wt-%, preferably from about 0.1 to 1 wt-%, based on the thermoplastic material.

According to an especially preferred embodiment of the present invention the thermoplastic polymer comprises a polyester resin, preferably polyethylene terephthalate (PET) and contains about 0.05 to 0.5 wt-%, preferably 0.1 to 0.35 wt-% of the cyclodextrin material. According to the present invention it is further preferred that the thermoplastic polymer comprises a polyolefine and contains about 0.20 to 0.75 wt-%, preferably 0.30 to 0.55 wt-% of the cyclodextrin material.

Prior to using or processing the cyclodextrin derivative according to the present invention it must be dried (by convection or vacuum oven) and be stored and handled throughout the operation of producing a cyclodextrin/ polymer composition so as to not pick up atmospheric moisture. The moisture content in the cyclodextrin should be less than 1,000 ppm by weight.

**Thermoplastic Polymer**

The container according to the present invention can be fabricated from a variety of thermoplastic resins having suitable physical properties (e.g., gas permeability, melt flow rate, intrinsic viscosity, color and clarity) for the stored product. Thermoplastic polymers used in this invention are common blow-molding-grade resins used for container packaging applications.

The resins most frequently used are polyethylene terephthalate (PET), high-density polyethylene (HDPE) and polypropylene (PP). Other materials often used are low-density polyethylene (LDPE), polystyrene (PS), and poly(vinyl chloride) (PVC). Polyester resin can be a PET homopolymer, a PET copolymer, a polyethylene naphthenate (PEN) copolymer or a polyester composition physically mixed into a blend.

In preferred embodiments of the present invention the thermoplastic polymer comprises a polyolefine, a polyester resin or mixtures thereof. Preferably the thermoplastic polymer comprises a polyolefine selected from the group comprising high density polyethylene (HDPE), low density polyethylene (LDPE), polystyrene (PS) and polyvinyl chloride. According to especially preferred embodiments of the present invention the thermoplastic polymer comprises a polyester resin selected from the group comprising polyethylene terephthalate (PET) homopolymer, polyethylene terephthalate copolymers and polyethylene naphthenate copolymers.

According to the present invention it is preferred, that the thermoplastic polymer comprises polyethylene terephthalate (PET) having an intrinsic viscosity in the range between 50 mL/g and 110 mL/g, preferably in the range between 70 mL/g and 90 mL/g. I is further preferred that the thermoplastic polymer comprises high density polyethylene having a melt flow rate in the range between 0.1 to 10 g/10 min.

The polyester material useful in common engineering plastics of the invention is a condensation/polymerization product of a diacid and a polyol. The product preferably employs an aromatic compound diacid such as a phthalate or naphthalate. The major diacids used in the polymers of the invention are terephthalic acid, (1,4-benzyene dicarboxylic acid) or 2,6-naphthalene dicarboxylic acid. However, other phthalic acids and naphthalene dicarboxylic acids can be used such as orthophthalic acid, 1,7-naphthalene dicarboxylic acid etc. Polyesters are typically referred to as aromatic-aliphatic or aromatic according to the copolymerized diol. Thus, polyethylene terephthalate chemical abstract No. 25038-59-9 (PET), poly (butylene terephthalate) chemical abstract No. 24968-12-5 (PBT) and related polymers are termed aromatic-aliphatic polyesters. Poly(bisphenol A-phthalate) is called an aromatic polyester resin or a polyarylate resin. PET, PBT and poly (ethylene-2,6-naphthalene dicarboxylate resins) (PEN) are the largest volume aromatic aliphatic products. Other aromatic aliphatic products include Eastman Kodak's Kodar® resin which is a PET resin modified with isophalate and dimethyl cyclohcxanc. Polyarylate resins are a lower volume special resins for high temperature (HDT) end uses. A preferred polyethylene terephthalic resin is typically made by a transesterification reaction of dimethyl terephthalate with ethylene glycol or 1,4-butane diol in the presence of a trace amount of a metal ion catalyst.

For blown thermoplastic extrusion polyolefins such as low density polyethylene (LDPE), linear low density polyethylene (LLDPE) or high density polyethylene (HDPE) are the most frequently used thermoplastic polymers, although polypropylene, nylon and polycarbonate are sometimes used to make blown film. Polyesters and nylons can also be used. For casting, molten thermoplastic resin or monomer dispersion are typically produced from polyethylene or polypropylene. Occasionally, nylon, polyester and PVC are cast. For roll coating of aqueous based acrylic urethane and PVDC, etc. dispersions are polymerized to an optimum crystallinity and molecular weight before coating.

A variety of thermoplastic materials are also used. Such materials include polyacrylonitrile, poly(acrylonitrile-co-butadiene-co-styrene) polymers, acrylic polymers such as polymethylmethacrylate, poly-n-butyl acrylate, poly(ethylene-co-acrylic acid), poly(ethylene-co-methacrylate), etc.; cellophane, cellulosics including cellulose acetate, cellulose acetate propionate, cellulose acetate butyrate and cellulose triacetate, etc.; fluoropolymers including polytetrafluoroethylene (TEFLON), poly(ethylene-co-tetrafluoroethylene) copolymers, (tetrafluoroethylene-co-propylene) copolymers, polyvinyl fluoride polymers, etc., Polyamides such as nylon 6, nylon 6,6, etc.; polycarbonates; polyesters such as poly(ethylene-co-terephthalate), poly(ethylene-co-1,4-naphthalene dicarboxylate), poly(butylene-co-terephthalate); polyimide materials; polyethylene materials including low density polyethylene; linear low density polyethylene, high density polyethylene, high molecular weight high density polyethylene, etc.; polypropylene, biaxially oriented polypropylene; polystyrene, biaxially oriented polystyrene; vinyl films including polyvinyl chloride, (vinyl chloride-co-vinyl acetate) copolymers, polyvinylidene chloride, polyvinyl alcohol, (vinyl chloride-co-vinylidene dichloride) copolymers, specialty films including polysulfone, polyphenylene sulfide, polyphenylene oxide, liquid crystal polyesters, polyether ketones, etc.

Suitable thermoplastic material according to the present invention are selected with respect the desired container properties (color, flexibility, etc.) and also in compliance with the manufacturing process. The methods for manufacturing such containers are well known procedures. Skilled artisans manufacturing thermoplastic polymers have learned to tailor the polymer material for thermoplastic processing and particular end use application by controlling molecular weight (the melt index has been selected by the thermoplastic industry as a measure of molecular weight--melt index is inversely proportional to molecular weight, density and crystallinity).

Polymers used in this invention can also contain other additives, which do not adversely affect the performance of the cyclodextrin, such as catalysts, stabilizers, processing aids, fillers, pigments, dyes and antioxidants.

In a preferred embodiment of the present invention the thermoplastic polymer comprises polyethylene terephthalate (PET) having an intrinsic viscosity in the range between 50 mL/g and 110 mL/g, preferably in the range between 70 mL/g and 90 mL/g. In a further preferred embodiment the thermoplastic polymer comprises high density polyethylene having a melt flow rate in the range between 0.1 to 10 g/10 min.

**Processing**

Commercially available equipment, used in the manufacture of containers, especially beverage containers may be used to make the containers for the present invention. Methods for forming containers include general blow molding techniques known in the art. The parison (takes the form of a miniature container or bottle) can either be extrusion-molded or injection molded.

The inventive composition consisting of a thermoplastic polymer and a modified cyclodextrin is created by physically mixing and dispersing the minor constituent, modified cyclodextrin, into the major constituent, the polymer, e.g. by using the extrusion process operation of a blow molder machine. Raw material used in any of the thermoforming procedures is a pelletized thermoplastic material.

Extrusion blow molding is divided into two broad categories: continuous extrusion and intermittent extrusion. The parison in both of these blow-molding processes is contained within a mold cavity having the volumetric configuration of the desired container and the parison is expanded by blowing with compressed air in the confines of the mold cavity. The continuous extrusion process is well suited for heat sensitive PVC materials, while intermittent extrusion is well suited for polyolefins (e.g., LDPE and HDPE).

In injection blow molding, the container is created from an injection molded blowable geometric form, called a parison or preform. More specifically, a preform is injection molded, temperature conditioned and then blow molded. In stretch blow molding or biaxially-orientation blow molding, careful processing of PET and PP whose molecules prefer to be coiled together and arranged randomly, will permit the orientation or partial uniaxial or biaxial alignment of the materials' molecules in the sidewall of a blow-molded bottle. The main cylindrical wall of the bottle is stretched by an area ratio of at least 2, usually at least 2.5 and desirably 4. This acts to orient the polymer of the cylindrical main wall of the bottle biaxally to strengthen it. The industry uses both one step and two step injection blow molding. The container making process includes an injection blow molding machine for continuously carrying out operations from injection molding of a single layer or multi-layer preform to blow molding of the primary container; or a two step process were the subsequent preform temperature conditioning and blow molding of the container takes place on a separate machine operation.

Especially polyester bottles are typically produced by injection blow molding. Two manufacturing techniques are typically used. In one method, a preform is made by injection mold techniques in a preformed shape having the neck and screw-cap portion of the bottle in approximately useful size but having the body of the preform substantially smaller than the final bottle shape. A single component or bilayer preform can be used. The preform is then inserted into a blow molding machine where it is heated and then blown into the appropriate shape. Alternatively, the resin can be injection below molded over a steel-core rod. The neck of the bottle is formed with the proper shaped received closures (cap) and resin is provided around the temperature conditioned rod for the blowing step. The rod with the resin is indexed into the molding and the resin is blown away from the rod against the mold walls. The resin cools in contact with the mold while into the transparent bottle. The finished bottle is ejected and the rod is moved again in the injection molding station. This process is favored for single cylindrical bottles but typically can not be used to introduce complex shapes such as handles into a bottle.

Oxidation products formed during the bottle forming operation may be immediately complexed by the cyclodextrin molecule if cyclodextrin and oxidation product are in close proximity, or in the subsequent migration step, as the oxidation product diffuses the polymer's tortuous path where it may be intercepted and complexed by a cyclodextrin free of a complex.

For some specific food packaging applications as for example hot-fill foodstuff and oxygen sensitive food (e. g., sauces, baby foods, and oxygen sensitive products like some beer and wine) a multi-layer preform is generally used. Poor oxygen barrier polymers like polyolefins can provide effective oxygen barriers by forming a multi-layer structure where polyethylene vinyl alcohol (EVOH) is sandwiched between two polyolefin layers. Gas-barrier performance of PET can be improved by co-injecting thin layer(s) of EVOH or polyamide into preforms for containers. These polymers are used as a barrier layer against oxygen and carbon dioxide. In all of these multi-layer structure cases, the inside of the container layer is either polyolefin or PET. The need for a cyclodextrin composition to reduce the transfer or migration of e.g. thermal oxidation thermal oxidation off-flavor compounds is even more important since these barrier layers drive the off-flavor compound gradient toward the stored food product. Alternatively, multilayer containers according to the present invention can be obtained by coextrusion processes.

Similar to the methods mentioned above, a laminated container can be made having an exterior layer typically comprising a thermoplastic with an interior layer comprising a barrier polymer. Either the barrier polymer or the polyester material or both can contain the modified or derivatized cyclodextrin material as a permeant trapping molecule or as a contaminate trapping molecule. The barrier polymer material can be any conventional thermoplastic. A multilayer container having e.g. a laminate preform material having an exterior layer of a poly(ethylene-terephthalate) and an interior layer of a barrier polymer can be made through sequential injection molding techniques. The first step involves the injection molding of a first preformed section. The preform section can comprise either the barrier polymer or the polyethylene terephthalate container material. The preform can then be transferred to a second station wherein the complimentary polymer is either injection molded on the interior of the preform (barrier polymer inside PET) or formed on the exterior of the preform (PET over the barrier polymer). Such a multi-step formation can also be done on a single machine having the appropriate internal working components for such injection molding operations. Between stages in the operation, the preforms must be cooled to a sufficient temperature to permit successful manufacture. Additional layers can be used if desired. The two or more layer preform material is then subjected to a reheat blow molding operation. The preform is reheated to a desirable temperature sufficient to permit blow molding into the desired shape. Not only does the blow molding operation achieved biaxial orientation of the layers, thereby improving strength, but also produces the desired end product, and shaped bottom if desired.

According to the present invention it is also contemplated to apply coating compositions containing a thermoplastic polymer and an inventive cyclodextrin derivative in order to improve the barrier properties of the coated article. Coating machines commonly apply a liquid composition containing a film forming material, additives that can help form and maintain the coating composition along with the effective amount of the substituted cyclodextrin material. The film forming materials are often called a binder. Such binders exist in the final coating as a polymer of high molecular weight. Thermoplastic polymers or crosslinking polymers can both be used. Such binders are grouped into certain overlapping classes including acrylic, vinyl, alkyl, polyester, etc. Further, the compositions described above are materials that can be used in forming the polymer films also have corresponding materials that can be used in the formation of aqueous and solvent based coating compositions. Such coating compositions can be made by combining the liquid medium with solid materials containing the polymer, the cyclodextrin and a variety of useful additives. Commonly, the cyclodextrin materials added to the coating composition as part of the solids component.

A useful barrier layer can also be made by coating the interior of either a preform or a formed container with a coating typically made from an aqueous dispersion or suspension of a useful polymer material containing the modified cyclodextrin material. In a preferred process, the preform or container is heated, coated with an aqueous dispersion of a polymer, and dried.

If desired multiple coatings may be applied continuously to e.g. PET. Thus the preform or bottle may be mounted with its longitudinal axis horizontal and rotated about the longitudinal axis. As it rotates it is first heated by an infra-red heater and then it picks up a coating of the aqueous dispersion from a coating point, e.g. a flexible doctor knife, then the water is evaporated off, and the coated preform heated by means of one or more infra-red heaters mounted adjacent the rotating article so that the coating is dried and the preform reheated before one revolution of the preform is completed: hence on reaching the coating point on completion of one revolution, a further coating of the aqueous dispersion is applied over the dried coating. Thus a multilayer coating may be formed as a spiral on the preform.

The coating may be applied to the interior or exterior surface and may be applied by spraying or dip coating. Coating the interior is advantageous particularly where the resultant bottle is intended to contain carbonated beverages. For example, there is a tendency for the carbon dioxide diffusing through the bottle wall to cause an exterior coating to lose adhesion after a period of time giving rise to blisters. In contrast, a coating on the interior surface will be held firmly in place, even if the adhesion is lost for some reason, by the pressure of the carbonated liquid.

The foregoing discussion illustrates various embodiments of the application under the barrier and trapping properties of the materials of the invention. The following examples and data further exemplify the invention.

Examples

**MATERIALS**

**Cyclodextrins**

Two different modified cyclodextrin materials were used in laboratory scale compounding and molding trials. Both of said materials were β-cyclodextrins having acetyl moieties. One of the acetyl β-cyclodextrins had a degree of substitution of 36% (in 36% of the hydroxyl groups of the cyclodextrin material, H is replaced by acetyl) and the other had a degree of substitution of 100%.

**Thermoplastic material**

A general-purpose polyethylene terephthalate (PET) bottle resin, KoSa 1102, was used as thermoplastic material. This PET is a copolymer resin having an intrinsic viscosity of 0.84 dl/g. To aid PET and CD pre-blending, resin chips (1.9 mm ± 0.3 mm) were cryogenically cooled with liquid nitrogen and ground to a granulated powder (less than 1.4 mm) using a Wiley Cutting Mill Model No. 3 fitted with a 14-mesh screen prior to the laboratory sample preparation.

**LABORATORY SAMPLE PREPARATION**

**Dry-Blending**

Granulated powder PET and the acetyl cyclodextrins were dry-blend batch mixed at 1 kg of PET to 2.5 grams acetyl cyclodextrin or 0.25% on a weight basis. The dry-blended materials were dried in a vacuum oven at 2.5 mm Hg pressure for 12 hours at 105°C.

**Single Pass Extrusion**

A Killion 25.4-mm basic metering single screw (L/D 20/1) extruder was used to compound acetyl beta cyclodextrin into the PET. The PET was starve fed into the extruder at 4.8 kg/hour at a screw speed of 82 rpm and extruded through a 3.175mm strand die. Then, control PET (no CD) and the two PET+ CD materials (DS=36% and DS=100% at 0.25% wt./wt.) are run using the zone temperatures in Table 1 below.

Table 1:

| Extruder zone temperatures for first pass | | | | | |
|---|---|---|---|---|---|
| Sample Identification | Zone 1 | Zone 2 | Zone 3 (Adapter) | Zone 4 (Die) | Melt |
| Control PET | 202 | 251 | 257 | 257 | 271 |
| PET, 0.25 % acetyl-β-CD, DS=36% | 202 | 251 | 257 | 257 | 271 |
| PET, 0.25 % acetyl-β-CD, DS=100% | 202 | 251 | 257 | 257 | 271 |
| All temperatures are given in °C | | | | | |

The first pass compounded PET control and PET/CD molten strands were quenched in a cold water bath and then pelletized into chips (1,75mm diameter x 3.25mm length).

A small portion of the PET chips from the single pass extrusion were subsequently cryogenically cooled with liquid nitrogen and ground using a Intermediate Wiley Cutting Mill with a 20-mesh screen to a granulated powder of particle size < 1 mm for analytical testing of the content of acetaldehyde (refer to Table 3).

**Second Pass Extrusion**

Single pass extrusion chipped PET samples were dried in a vacuum oven at 2.5 mm Hg pressure for 12 hours at 105°C prior to the second pass extrusion. The PET chip materials were extruded a second time on the Killion 25.4-mm single screw extruder and through the 3.175 mm strand die using the zone temperatures given in Table 2.

Table 2:

| Extruder zone temperatures for second pass | | | | | |
|---|---|---|---|---|---|
| Sample Identification | Zone 1 | Zone 2 | Zone 3 (Adapter) | Zone 4 (Die) | Melt |
| Control PET | 204 | 265 | 263 | 263 | 276 |
| PET, 0.25 % acetyl-β-CD, DS=36% | 204 | 265 | 263 | 263 | 276 |
| PET, 0.25 % acetyl-β-CD, DS=100% | 204 | 265 | 263 | 263 | 276 |
| All temperatures are given in °C | | | | | |

The second pass compounded PET control and PET/CD molten strands were quenched in a cold water bath and then pelletized into chips (1.75 mm diameter x 3.25 mm length). Following the second pass extrusion, the PET samples were dried for 12 hours at 105°C in a vacuum oven at 2.5 mm Hg pressure.

**PET Molding**

Each second pass granulated powder PET sample was run in an Atlas lab-mixing molder to simulate injection molding a PET bottle preform and to form regenerated acetaldehyde in the PET resin. Control samples without CD and samples with 0.25% acetyl β-cyclodextrin were run identically by mixing the sample for 2 minutes at molding temperatures of 260°C, 265°C or 270°C. At the end of the 2 minutes mixing period, the molten PET was injected from the mixing chamber and the melt quenched in liquid nitrogen.

Control samples without CD and the samples with 0.25% acetyl β-cyclodextrin were then cryogenically cooled with liquid nitrogen and ground in an Intermediate Wiley Cutting Mill with a 20-mesh screen to a granulated powder of particle size < 1 mm. The three molding temperature sets of samples were analyzed by static headspace gas chromatography using flame ionization detection.

**ANALYTICAL METHOD**

Acetaldehyde (AA) is measured in the single pass extrusion; second pass extrusion and Atlas laboratory mixing molder prepared test samples by allowing the AA to out-gas from the resin into the headspace of a glass vial during confinement. The confinement period is 90 minutes and the temperature is either 85°C or 150°C. An aliquot of air taken from the headspace during the confinement period is analyzed by static headspace and high-resolution gas chromatography (HRGC) using flame ionization detection.

**Apparatus**

A 0.25+/-0.002g sample of granulated PET is placed into a 22-ml glass vial. The vial is immediately capped using a Teflon® faced butyl rubber septa and aluminum crimp top. Acetaldehyde is desorbed from the sample into the headspace by heating the vial at either 85°C or 150°C for 90 minutes. The vial is transferred to a heated (maintained at either 85°C or 150°C) Hewlett Packard model 19395A headspace sampler attached to a Hewlett Packard Model IHP-5880 II GC equipped with a flame ionization detector (FID), and computerized data collection. J&W Scientific capillary column ( DB-5, 30 m x 0.25 mm I.D., 1.0 μm film) with helium carrier flow set at a split ratio of 20: 1. HRGC is used to measure the acetaldehyde concentration in the headspace of the vial. The unknown acetaldehyde peak area is integrated to quantitate the concentration, and then the unknown AA concentration is calculated from a four-point standard calibration covering the concentration range of the samples. Sample concentrations are reported in ppm (μg/g - weight/weight). The AA concentration is calculated from the calibration curve slope or response factor (RF).

Concentration of Compound in ppm = (Peak Area x RF) / Sample Wt.


Concentration of Compound in ppm = (Peak Area / Calibration Curve Slope) / Sample Wt.


## TEST RESULTS

### Residual Acetaldehyde Test Results

PET lab test samples were analyzed in triplicate for AA and the respective mean and percent relative standard deviation (RSD) was calculated. The test results are given in tables 3 to7.

Table 3:

| Single pass extruded PET ground to 20-mesh. Sample conditioned for 90 minutes at 85°C prior to static headspace analysis. | | | |
|---|---|---|---|
| Sample Identification | Mean [μg/g] | RSD [%] | AA reduction [%] |
| Control PET | 1,6 | 20 | - |
| PET, 0.25 %acetyl-β-CD, DS=36% | 0,68 | 2,9 | 58 |
| PET, 0.25 % acetyl-β-CD, DS=100% | 0,97 | 4,9 | 39 |

Single pass extrusion PET samples showed AA (Table 3) to be significantly lower for PET compounded with lower acetyl degree of substitution (DS=36%) than for high acetyl degree of substitution (DS=100%).

Table 4:

| 20 mesh dried second pass PET run in ATLAS laboratory mixing molder for 2 minutes at 260°C. Molded parts ground to 20-mesh and samples conditioned for 90 minutes at 85°C prior to static headspace analysis. | | | |
|---|---|---|---|
| Sample Identification | Mean [μg/g] | RSD [%] | AA reduction [%] |
| Control PET | 6,2 | 2,6 | - |
| PET, 0.25 % acetyl-β-CD, DS=36% | 3,1 | 0,8 | 50 |
| PET, 0.25 % acetyl-β-CD, DS=100% | 5,9 | 1,8 | 4,8 |

Table 5:

| 20 mesh dried second pass PET run in ATLAS laboratory mixing molder for 2 minutes at 265°C. Molded parts ground to 20-mesh and samples conditioned for 90 minutes at 85°C prior to static headspace analysis. | | | |
|---|---|---|---|
| Sample Identification | Mean [μg/g] | RSD [%] | AA reduction [%] |
| Control PET | 13 | 0,8 | - |
| PET, 0.25 % acetyl-β-CD, DS=36% | 3,5 | 1,4 | 73 |
| PET, 0.25 % acetyl-β-CD, DS=100% | 4,3 | 3,1 | 67 |

Table 6:

| 20 mesh dried second pass PET run in ATLAS laboratory mixing molder for 2 minutes at 270°C. Molded parts ground to 20-mesh and samples conditioned for 90 minutes at 85°C prior to static headspace analysis. | | | |
|---|---|---|---|
| **Sample Identification** | **Mean** [μg/g] | **RSD** [%] | **AA reduction** [%] |
| Control PET | 9,7 | 4,3 | - |
| PET, 0.25 % acetyl-β-CD, DS=36% | 3,0 | 2,8 | 69 |
| PET, 0.25 % acetyl-β-CD, DS=100% | 11 | 4,5 | (13) |
| ( ) Increase over control | | | |

Table 7:

| 20 mesh dried second pass PET run in ATLAS laboratory mixing molder for 2 minutes at 270°C. Molded parts ground to 20-mesh and samples conditioned for 90 minutes at 150°C prior to static headspace analysis. | | | |
|---|---|---|---|
| **Sample Identification** | **Mean** [μg/g] | **RSD** [%] | **AA reduction** [%] |
| Control PET | 21 | 2,8 | - |
| PET, 0.25 % acetyl-β-CD, DS=36% | 8,2 | 6,2 | 61 |
| PET, 0.25 % acetyl-β-CD, DS=100% | 18 | 1,5 | 14 |

Second pass samples that were molded in the Atlas lab mixing molder showed significantly higher AA concentration than the single pass PET lab samples. This is related to both greater high temperature mixing time and shear. It is believed that the cyclodextrin cavities containing an AA complex formed during the single screw extrusion steps are regenerated (i.e., the AA-complex is removed) during the vacuum heating step following the second pass extrusion. This is based on the excellent AA reductions noted in the Atlas lab mixing molder samples following two single screw extrusion passes.

As can be taken from tables 4 to 7, at all three Atlas molding temperatures (260°C, 265°C and 270°C), the lower acetyl CD substitution has greater regenerated AA reductions than for high acetyl substitution. Regenerated AA reductions were shown at sample confinement temperatures of 85°C and 150°C. Table 6 and Table 7 provide a comparison of 270°C Atlas molded samples analyzed for AA using a confinement temperature of 85°C and 150°C, respectively. The AA concentration is 2 x greater at 150°C as it is at 85°C, while the AA reduction is similar for the sample with a 36% degree of substitution.

**Claims**

1.  A container having improved barrier properties, the container comprising

    (a) a thermoplastic polymer; and
    (b) having uniformly dispersed in the polymer an effective absorbing amount of a cyclodextrin material; wherein the cyclodextrin is substantially free of an inclusion complex compound and the cyclodextrin comprises an α-cyclodextrin, a β-cyclodextrin, a γ-cyclodextrin or mixtures thereof, having pendant moieties or substituents that render the cyclodextrin compatible with the thermoplastic polymer

    **characterized in that** in 20 to 40 % of the hydroxyl groups of the cyclodextrin material, H is replaced by a substituent.

2.  The container of claim 1,
    **characterized in that** 25 to 40 %, preferably 30 to 35 % and most preferably 33 % of the hydroxyl groups of the cyclodextrin material are substituted.

3. The container of claims 1 or 2,
   **characterized in that** the thermoplastic material contains 0.05 to 5 wt-%, preferably 0.1 to 1 wt-% of the cyclodextrin, based on the thermoplastic material.

4. The container of any one of claims 1 to 3,
   wherein the thermoplastic polymer comprises a polyolefine, a polyester resin or mixtures thereof.

5. The container of claim 4,
   wherein the thermoplastic polymer comprises a polyolefine selected from the group comprising high density polyethylene (HDPE), low density polyethylene (LDPE), polystyrene (PS) and polyvinyl chloride.

6. The container of claim 4,
   wherein the thermoplastic polymer comprises a polyester resin selected from the group comprising polyethylene terephthalate (PET) homopolymer, polyethylene terephthalate copolymers and polyethylene naphthenate copolymers.

7. The container of any one of the preceding claims,
   wherein the thermoplastic polymer comprises polyethylene terephthalate (PET) having an intrinsic viscosity in the range between 50 mL/g and 110 mL/g, preferably in the range between 70 mL/g and 90 mL/g.

8. The container of any one of the preceding claims,
   wherein the thermoplastic polymer comprises high density polyethylene having a melt flow rate in the range between 0.1 to 10 g/10 min.

9. The container of any one of the preceding claims,
   the container having an average wall thickness in the range between 100 μm and 2000 μm, preferably in the range between 150 μm and 950 μm.

10. The container of any one of the preceding claims,
    the container comprising a thermoplastic polymer selected from the group comprising polyethylene terephthalate (PET) homopolymer, polyethylene terephthalate copolymers and polyethylene naphthenate copolymers and the container having an average wall thickness in the range between 150 μm and 400 μm.

11. The container of any one of the preceding claims,
    the container comprising a thermoplastic polymer selected from the group comprising a polyolefine selected from the group comprising high density polyethylene (HDPE), low density polyethylene (LDPE), polystyrene (PS) and polyvinyl chloride and the container having an average wall thickness in the range between 300 μm and 950 μm.

12. The container of any one of the preceding claims,
    **characterized in that** the cyclodextrin material comprises substituents having a silyl ether group, an alkyl ether group and/or an alkyl ester group.

13. The container of claim 12,
    **characterized in that** the alkyl ester substituents comprise acetyl moieties, propyl moieties and/or butyl moieties.

14. The container of claim 12,
    **characterized in that** the alkyl ether substituents comprise methyl moieties, ethyl moieties and/or propyl moieties.

15. The container of claim 12,
    **characterized in that** the silyl ether substituents comprise methyl moieties, ethyl moieties, propyl moieties and/or butyl moieties.

16. The container of any one of claims I to 12,
    **characterized in that** the cyclodextrin material is a β-cyclodextrin having acetyl moieties.

17. The container of any one of the preceding claims,

wherein the thermoplastic polymer comprises a polyester resin, preferably polyethylene terephthalate (PET) and contains 0.05 to 0.5 wt-%, preferably 0.1 to 0.35 wt-% of the cyclodextrin material.

18. The container of any one of the preceding claims,
   wherein the thermoplastic polymer comprises a polyolefine and contains 0.20 to 0.75 wt-%, preferably 0.30 to 0.55 wt-% of the cyclodextrin material.

19. The container of any one of the preceding claims,
   the container having at least two layers, wherein at least one layer comprises

   (a) a thermoplastic polymer; and
   (b) having uniformly dispersed in the polymer an effective absorbing amount of a cyclodextrin material; wherein the cyclodextrin is free of an inclusion complex compound and the cyclodextrin comprises an $\alpha$-cyclodextrin, a $\beta$-cyclodextrin, a $\gamma$-cyclodextrin or mixtures thereof, having pendant moieties or substituents that render the cyclodextrin compatible with the thermoplastic polymer,

   wherein 20 to 40 % of the hydroxyl groups of the cyclodextrin material are substituted.

## Patentansprüche

1. Behälter mit verbesserten Barriereeigenschaften, wobei der Behälter

   (a) ein thermoplastisches Polymer umfasst; und
   (b) eine in dem Polymer gleichmäßig dispergierte, wirksam absorbierende Menge an einem Cyclodextrinmaterial aufweist, wobei das Cyclodextrin im Wesentlichen frei von Einschlusskomplexverbindungen ist und das Cyclodextrin ein $\alpha$-Cyclodextrin, ein $\beta$-Cyclodextrin, ein $\gamma$-Cyclodextrin oder Mischungen davon umfasst, das Seitengruppen oder Substituenten aufweist welche das Cyclodextrin mit dem thermoplastischen Polymer kompatibel machen,

   **dadurch gekennzeichnet, dass** bei 20 bis 40 % der Hydroxylgruppen des Cyclodextrinmaterials H durch einen Substituenten ersetzt ist.

2. Behälter gemäß Anspruch 1,
   **dadurch gekennzeichnet, dass** 25 bis 40 %, vorzugsweise 30 bis 35 % und am meisten bevorzugt 33 % der Hydroxylgruppen des Cyclodextrinmaterials substituiert sind.

3. Behälter gemäß Anspruch 1 oder 2,
   **dadurch gekennzeichnet, dass** das thermoplastische Material, bezogen auf das thermoplastische Material 0,05 bis 5 Gew.-%, vorzugsweise 0,1 bis 1 Gew.-%, Cyclodextrin enthält.

4. Behälter gemäß einem der Ansprüche 1 bis 3, wobei das thermoplastische Polymer ein Polyolefin, ein Polyesterharz oder Mischungen davon umfasst.

5. Behälter gemäß Anspruch 4, wobei das thermoplastische Polymer ein Polyolefin ausgewählt aus der Gruppe umfassend Polyethylen hoher Dichte (HDPE), Polyethylen niedriger Dichte (LDPE), Polystyrol (PS) und Polyvinylchlorid umfasst.

6. Behälter gemäß Anspruch 4, wobei das thermoplastische Polymer ein Polyesterharz ausgewählt aus der Gruppe umfassend Polyethylenterephthalat (PET) Homopolymer, Polyethylenterephthalat-Copolymere und Polyethylennaphthenat-Copolymere umfasst.

7. Behälter nach einem der vorhergehenden Ansprüche, wobei das thermoplastische Polymer Polyethylenterephthalat (PET) umfasst, welches eine Grenzviskosität im Bereich zwischen 50 mL/g und 110 mL/g, vorzugsweise im Bereich zwischen 70 mL/g und 90 mL/g aufweist.

8. Behälter nach einem der vorhergehenden Ansprüche, wobei das thermoplastische Polymer Polyethylen hoher Dichte umfasst, welches einen Schmelzdurchfluss im Bereich zwischen 0,1 bis 10 g/10 min. aufweist.

9. Behälter gemäß einem der vorhergehenden Ansprüche, wobei der Behälter eine durchschnittliche Wanddicke im Bereich zwischen 100 µm und 2.000 µm, vorzugsweise im Bereich zwischen 150 µm und 950 µm aufweist.

10. Behälter nach einem der vorhergehenden Ansprüche, wobei der Behälter ein thermoplastisches Polymer ausgewählt aus der Gruppe umfassend Polyethylenterephthalat-(PET) Homopolymer, Polyethylenterephthalat-Copolymere und Polyethylennaphthenat-Copolymere aufweist und der Behälter eine durchschnittliche Wanddicke im Bereich zwischen 150 µm und 400 µm aufweist.

11. Behälter nach einem der vorhergehenden Ansprüche, wobei der Behälter ein thermoplastisches Polymer ausgewählt aus der Gruppe umfassend ein Polyolefin ausgewählt aus der Gruppe umfassend Polyethylen hoher Dichte (HDPE), Polyethylen niedriger Dichte (LDPE), Polystyrol (PS) und Polyvinylchlorid umfasst und der Behälter eine durchschnittliche Wanddicke im Bereich zwischen 300 µm und 950 µm aufweist.

12. Behälter nach einem der vorhergehenden Ansprüche,
dadurch gekennzeichnet, dass das Cyclodextrinmaterial Substituenten umfasst, welche eine Silylethergruppe, eine Alkylethergruppe und/oder eine Alkylestergruppe aufweisen.

13. Behälter gemäß Anspruch 12,
dadurch gekennzeichnet, dass die Alkylestersubstituenten Acetyl-Gruppen, Propyl-Gruppen und/oder Butyl-Gruppen umfassen.

14. Behälter nach Anspruch 12,
dadurch gekennzeichnet, dass die Alkylethersubstituenten Methyl-Gruppen, Ethyl-Gruppen und/oder Propyl-Gruppen umfassen.

15. Behälter gemäß Anspruch 12,
dadurch gekennzeichnet, dass die Silylethersubstituenten Methyl-Gruppen, Ethyl-Gruppen, Propyl-Gruppen und/oder Butyl-Gruppen umfassen.

16. Behälter nach einem der Ansprüche 1 bis 12,
dadurch gekennzeichnet, dass das Cyclodextrinmaterial ein β-Cyclodextrinmaterial ist, welches Acetyl-Gruppen aufweist.

17. Behälter nach einem der vorhergehenden Ansprüche, wobei das thermoplastische Material ein Polyesterharz, vorzugsweise ein Polyethylenterephthalat (PET) umfasst und 0,05 bis 0,5 Gew.-%, vorzugsweise 0,1 bis 0,35 Gew.-% an Cyclodextrinmaterial enthält.

18. Behälter nach einem der vorhergehenden Ansprüche, wobei das thermoplastische Polymer ein Polyolefin umfasst und 0,2 bis 0,75 Gew.-%, vorzugsweise 0,3 bis 0,55 Gew.-% an Cyclodextrinmaterial enthält.

19. Behälter nach einem der vorhergehenden Ansprüche, wobei der Behälter wenigstens zwei Schichten aufweist, wobei wenigstens eine Schicht

(a) ein thermoplastisches Polymer umfasst; und
(b) eine in dem Polymer gleichmäßig dispergierte, wirksam absorbierende Menge an einem

Cyclodextrinmaterial aufweist, wobei das Cyclodextrin frei von Einschlusskomplexverbindungen ist und das Cyclodextrin ein α-Cyclodextrin, ein β-Cyclodextrin, ein γ-Cyclodextrin oder Mischungen davon umfasst, das Seitengruppen oder Substituenten aufweist welche das Cyclodextrin mit dem thermoplastischen Polymer kompatibel machen und wobei 20 bis 40 % der Hydroxyl-Gruppen des Cyclodextrinmaterials substituiert sind.

## Revendications

1. Conteneur ayant des propriétés de barrière améliorées, le conteneur comportant :

(a) un polymère thermoplastique, et
(b) dispersée de manière uniforme dans le polymère, une quantité absorbante efficace d'un matériel de cyclodextrine, dans lequel la cyclodextrine est essentiellement exempte d'un composé de complexe d'inclusion et la cyclodextrine comporte une α-cyclodextrine, une β-cyclodextrine, une γ-cyclodextrine ou des mélanges de celles-ci, ayant des fragments ou substituants pendants qui rendent la cyclodextrine compatible avec le polymère thermoplastique,

**caractérisé en ce que** dans 20 à 40 % des groupes hydroxyle du matériel de cyclodextrine, H est remplacé par un substituant.

2. Conteneur selon la revendication 1,
**caractérisé en ce que** 25 à 40 %, de préférence 30 à 35 %, et de manière la plus préférée 33 % des groupes hydroxyle du matériel de cyclodextrine sont substitués.

3. Conteneur selon la revendication 1 ou 2,
**caractérisé en ce que** le matériel thermoplastique contient 0,05 à 5 % en poids, de préférence 0,1 à 1 % en poids de la cyclodextrine, sur la base du matériel thermoplastique.

4. Conteneur selon l'une quelconque des revendications 1 à 3,
dans lequel le polymère thermoplastique comporte une polyoléfine, une résine polyester ou des mélanges de celles-ci.

5. Conteneur selon la revendication 4,
dans lequel le polymère thermoplastique comporte une polyoléfine sélectionnée parmi le groupe comportant un polyéthylène à haute densité (HDPE), un polyéthylène à faible densité (LDPE), un polystyrène (PS) et du chlorure de polyvinyle.

6. Conteneur selon la revendication 4,
dans lequel le polymère thermoplastique comporte une résine polyester sélectionnée parmi le groupe comportant un homopolymère de polyéthylènetéréphtalate (PET), des copolymères de polyéthylènetéréphtalate et des copolymères de polyéthylènenaphténate.

7. Conteneur selon l'une quelconque des revendications précédentes,
dans lequel le polymère thermoplastique comporte un polyéthylènetéréphtalate (PET) ayant une viscosité intrinsèque dans la plage comprise entre 50 mL/g et 110 mL/g, de préférence dans la plage comprise entre 70 mL/g et 90 mL/g.

8. Conteneur selon l'une quelconque des revendications précédentes,
dans lequel le polymère thermoplastique comporte un polyéthylène à haute densité ayant un débit de matière fondue dans la plage comprise entre 0,1 et 10 g/10 min.

9. Conteneur selon l'une quelconque des revendications précédentes,
le conteneur ayant une épaisseur moyenne de paroi dans la plage comprise entre 100 μm et 2000 μm, de préférence dans la plage comprise entre 150 μm et 950 μm.

10. Conteneur selon l'une quelconque des revendications précédentes,
le conteneur comportant un polymère thermoplastique sélectionné parmi le groupe comportant un homopolymère de polyéthylènetéréphtalate (PET), des copolymères de polyéthylènetéréphtalate et des copolymères de polyéthylènenaphténate et le conteneur ayant une épaisseur moyenne de paroi dans la plage comprise entre 150 μm et 400 μm.

11. Conteneur selon l'une quelconque des revendications précédentes,
le conteneur comportant un polymère thermoplastique sélectionné parmi le groupe comportant une polyoléfine sélectionnée parmi le groupe comportant un polyéthylène à haute densité (HDPE), un polyéthylène à faible densité (LDPE), un polystyrène (PS) et du chlorure de polyvinyle et le conteneur ayant une épaisseur moyenne de paroi dans la plage comprise entre 300 μm et 950 μm.

12. Conteneur selon l'une quelconque des revendications précédentes,
**caractérisé en ce que** le matériel de cyclodextrine comporte des substituants ayant un groupe d'éther de silyle, un groupe d'éther d'alkyle et/ou un groupe d'ester d'alkyle.

**13.** Conteneur selon la revendication 12,
**caractérisé en ce que** les substituants d'ester d'alkyle comportent des fragments acétyle, des fragments propyle et/ou des fragments butyle.

**14.** Conteneur selon la revendication 12,
**caractérisé en ce que** les substituants d'éther d'alkyle comportent des fragments méthyle, des fragments éthyle et/ou des fragments propyle.

**15.** Conteneur selon la revendication 12,
**caractérisé en ce que** les substituants d'éther de silyle comportent des fragments méthyle, des fragments éthyle, des fragments propyle et/ou des fragments butyle.

**16.** Conteneur selon l'une quelconque des revendications 1 à 12,
**caractérisé en ce que** le matériel de cyclodextrine est une β-cyclodextrine ayant des fragments acétyle.

**17.** Conteneur selon l'une quelconque des revendications précédentes,
dans lequel le polymère thermoplastique comporte une résine polyester, de préférence du polyéthylènetéréphtalate (PET) et contient 0,05 à 0,5 % en poids, de préférence 0,1 à 0,35 % en poids du matériel de cyclodextrine.

**18.** Conteneur selon l'une quelconque des revendications précédentes,
dans lequel le polymère thermoplastique comporte une polyoléfine et contient de 0,20 à 0,75 % en poids, de préférence 0,30 à 0,55 % en poids du matériel de cyclodextrine.

**19.** Conteneur selon l'une quelconque des revendications précédentes,
le conteneur ayant au moins deux couches, au moins une couche comportant

(a) un polymère thermoplastique, et
(b) uniformément dispersée dans le polymère, une quantité ab-' sorbante efficace d'un matériel de cyclodextrine, dans lequel la cyclodextrine est exempte d'un composé de complexe d'inclusion et la cyclodextrine comporte une α-cyclodextrine, une β-cyclodextrine, une γ-cyclodextrine ou des mélanges de celles-ci, ayant des fragments ou substituants pendants qui rendent la cyclodextrine compatible avec le polymère thermoplastique,

dans lequel 20 à 40 % des groupes hydroxyle du matériel de cyclodextrine sont substitués.